# DEMANDE DE BREVET EUROPEEN

(11) **EP 0 736 260 A1**
(43) Date de publication de la demande: **09.10.1996**
(21) Numéro de dépôt: 96200592.2
(22) Date de dépôt: 05.03.1996
(51) Int. Cl.: A23L 1/182, A23L 1/10

(54) **Procédé de préparation d'un riz étuvé**

(30) Priorité: 05.04.1995 CH 970/95
(71) Demandeur: SOCIETE DES PRODUITS NESTLE S.A., CH-1800 Vevey (CH)
(72) Inventeur: Ammann, Nico, CH-1807 Blonay (CH)
(74) Mandataire: Wavre, Claude-Alain

(57) **Abrégé**

Procédé de préparation d'un riz étuvé à partir d'un riz décortiqué, dans lequel on trempe le riz dans de l'eau, on l'égoutte, on le cuit à la vapeur sous pression, on le sèche et on le polit.
L'invention concerne également un procédé de congélation d'un riz cuit, après en avoir séparé le son et le germe à l'état chaud et humide.

## Description

La présente invention a pour objet un procédé de préparation d'un riz étuvé à partir d'un riz décortiqué.

On connaît divers procédés de préparation d'un riz étuvé à partir d'un riz décortiqué.

US 5130153 décrit ainsi un procédé de préparation d'un riz étuvé à partir d'un riz décortiqué comprenant de nombreuses étapes, notamment des étapes de trempage, de cuisson sous pression, de chauffage de préférence aux micro-ondes, puis de réduction de pression et enfin plusieurs étapes de pré-séchage et de séchage avant les étapes finales de polissage et de triage des grains.

De même US 5316783 décrit également un procédé de préparation d'un riz étuvé à partir d'un riz décortiqué dans lequel on effectue un trempage, un égouttage, on expose le riz à un flux d'air chaud et/ou de vapeur dans des conditions particulières à respecter très strictement de manière à obtenir 100% de gélatinisation de l'amidon, on sèche le riz et on sépare le son et le germe par agitation.

La présente invention a pour but de proposer un procédé de préparation d'un riz étuvé à partir d'un riz décortiqué qui soit simple, efficace et rapide.

A cet effet, dans le présent procédé de préparation d'un riz étuvé à partir d'un riz décortiqué, on trempe le riz dans une eau à 20-70°C durant 45 min à 7 h de manière à élever sa teneur en eau à 33-40%, on l'égoutte et on le cuit à la vapeur en un lit de 2-10 cm d'épaisseur, de préférence 3-5 cm d'épaisseur. De préférence, on sèche le riz cuit jusqu'à une teneur en eau résiduelle de 10-20% et on sépare le son et le germe.

Le présent procédé permet en effet d'obtenir, à partir d'un riz décortiqué, en un nombre restreint d'étapes simples et sûres, un riz étuvé présentant de nombreuses qualités.

Le procédé selon la présente invention permet en particulier d'obtenir un riz étuvé qui ne présente pas le goût particulier du riz étuvé traditionnel, mais dont le goût est semblable à celui d'un riz non étuvé.

Le riz étuvé obtenu par le présent procédé a un temps de cuisson plus court que le riz étuvé traditionnel. Mais il peut également supporter des temps de cuisson relativement longs sans devenir collant, notamment dans la préparation d'un plat culinaire tel que le risotto, par exemple. On peut le laisser cuire pendant 25 min sans qu'il devienne collant, par exemple.

Ainsi, on a constaté que par la mise en oeuvre de ce procédé, on arrive à obtenir un riz étuvé de couleur blanche proche de celle du riz blanc et ayant ultérieurement lors de la cuisson une très bonne stabilité.

Dans le procédé de préparation d'un riz étuvé à partir d'un riz décortiqué selon la présente invention, on effectue tout d'abord un trempage du riz décortiqué dans de l'eau à 20-70°C durant 45 min à 7 h de manière à augmenter la teneur en eau des grains de riz à 33-40%. De préférence, on effectue cette étape à une température juste inférieure à la température de gélatinisation qui est d'environ 70°C pour la plupart des variétés de riz.

Pour égoutter le riz, on peut le laisser reposer 3 à 5 min sur un tamis, par exemple. L'eau ainsi éliminée, lors de cette étape, peut être récupérée pour le trempage du lot de riz décortiqué suivant, par exemple.

On peut ensuite effectuer la cuisson à la vapeur sous pression pendant 3 à 15 min à 111-130°C, par exemple. Cette étape peut être réalisée enun lit de 3 à 5 cm d'épaisseur, soit dans un cuiseur à bande, soit en lit fluidisé, ou encore sur des plateaux, de telle manière que les grains ne forment qu'une seule couche ou lit de ladite épaisseur, par exemple. Ceci permet d'éviter une agglomération des grains de riz au cours de leur cuisson. En effet, lors de cette étape l'amidon subit une gélatinisation de 70-100%.
Le degré de gelatinisation peut être mesuré par une mesure physique, notamment en utilisant la méthode de "calorimétrie différentielle par balayage" (Cereal chemistry vol. 66 - No 4 - 1989.), par exemple.

On peut ensuite sécher le riz durant 20 à 60 min, dans un flux d'air chaud à 40-80°C, jusqu'à une teneur en eau résiduelle de 10-20%, par exemple. De préférence, on sèche le riz jusqu'à une teneur en eau résiduelle de 13-17 %.

Si l'on désire sécher le riz jusqu'à une teneur en eau résiduelle inférieure à 13%, notamment de 5-7%, on peut prévoir une étape distincte de post-séchage, par exemple.
On peut prévoir une étape de post-séchage, notamment dans le cas où l'on désire mélanger le riz avec d'autres composants ayant une teneur en eau résiduelle relativement élevée, de manière à réduire la teneur en eau résiduelle du plat culinaire, par exemple.

C'est ainsi que dans un mode de réalisation du présent procédé, on peut effectuer un séchage jusqu'à une teneur en eau résiduelle de 13-17%, un polissage, puis une étape de post-séchage, par exemple.

Mais pour obtenir une teneur en eau résiduelle inférieure à 13%, on peut également effectuer un séchage dans un flux d'air chaud à 40-80°C, pendant 20 à 60 min, puis un post-sèchage à 20-50°C, pendant 10 à 30 min, juste avant l'étape de polissage, par exemple.

De préférence, on laisse ensuite le riz se refroidir à température ambiante. On peut séparer le son et le germe selon des techniques classiques, notamment en dépelliculant les grains de riz par passage entre deux rouleaux, avant pendant ou, de préférence, après le séchage et le refroidissement, par exemple.

On peut soumettre le riz à un polissage juste après la séparation du son et du germe, par exemple. On peut ensuite effectuer un triage pour éliminer les grains de riz défectueux, par exemple.

Dans une autre forme de réalisation du présent procédé, on peut également congeler le riz cuit, seul ou en mélange avec d'autres composants d'un plat culinaire, après en avoir séparé le son et le germe à l'état chaud et humide, par exemple, et on ne le sèche pas.

Le procédé selon la présente invention est décrit plus en détails dans les exemples ci-après où les pourcentages sont donnés en poids, sauf indication contraire.

### Exemple 1

On trempe un riz mi-long décortiqué, de la variété fino ribe, dans une eau à 70°C pendant 50 min. On élève ainsi sa teneur en eau à 37%.

On égoutte le riz trempé pendant 4 min.

On introduit le riz égoutté dans un cuiseur à bande, dans lequel on le cuit en une couche de 4 cm à la vapeur sous pression à 120°C pendant 7 min jusqu'à un degré de gélatinisatin de l'amidon de 75%. On sèche alors le riz pendant 1 h dans un flux d'air chaud à 65°C jusqu'à une teneur en eau résiduelle à 14%.

Puis on laisse refroidir le riz à température ambiante.

On sépare le son et le germe par usinage, en passant les grains de riz entre deux rouleaux, on polit les grains puis on les trie.

### Exemple 2

On procède de la manière décrite à l'exemple 1, à l'exception du fait que l'on effectue une étape de post-séchage à 50°C pendant 15 min, après l'étape de polissage.

On obtient ainsi un riz étuvé dont la teneur en eau résiduelle est de 7%.

### Exemple 3

On procède de la manière décrite à l'exemple 1, à l'exception du fait que l'on effectue une étape de post-séchage directement après l'étape de séchage.

On effectue cette étape de post-séchage dans un flux d'air chaud à 50°C pendant 15 min de manière à obtenir un riz ayant une teneur résiduelle en eau de 7%.

Puis on laisse refroidir le riz à température ambiante.

On sépare le son et le germe par agitation, on polit les grains, puis on effectue un triage pour éliminer les grains défectueux.

### Exemple 4

On procède de la manière décrite à l'exemple 1, à l'exception du fait que l'on polit les grains de riz à l'état humide et chaud après l'étape de cuisson à la vapeur et qu'on ne les sèche pas.

On rince alors les grains de riz polis pendant 3 min à 15° C. Lors de cette étape de rinçage, la teneur en eau résiduelle des grains de riz augmente encore de 7%, de manière que leur teneur en eau résiduelle, après cette étape, soit de 44%.

On transporte les grains de riz polis et rincés sur un tamis vibrant à une température de -25° C, de manière à éviter qu'ils collent entre eux lors de cette étape de pré-congélation.

On congèle le riz ainsi préparé.

## Revendications

1. Procédé de préparation d'un riz étuvé à partir d'un riz décortiqué, dans lequel on trempe le riz dans une eau à 20-70°C durant 45 min à 7 h de manière à élever sa teneur en eau à 33-40%, on l'égoutte et on le cuit à la vapeur sous pression en un lit de 3 à 5 cm d'épaisseur.

2. Procédé selon la revendication 1, dans lequel on cuit à la vapeur sous pression pendant 3 à 15 min à 111-130°C.

3. Procédé selon la revendication 1, dans lequel on sèche le riz cuit durant 20 à 60 min dans un flux d'air chaud à 50-80°C, jusqu'à une teneur en eau résiduelle de 10-20%.

4. Procédé selon la revendication 2, dans lequel on effectue un post-séchage pendant 10 à 30 min à 20-50°C, jusqu'à une teneur en eau résiduelle de 5-10%.

5. procédé selon la revendication 3, dans lequel on sépare le son et le germe et on polit le riz avant ou après l'étape de post-séchage.

6. Procédé selon la revendication 1, dans lequel on congèle le riz cuit, seul ou en mélange avec d'autres composants d'un plat culinaire, après en avoir séparé le son et le germe à l'état chaud et humide.
